# EUROPEAN PATENT APPLICATION

(11) **EP 2 740 923 A1**
(43) Date of publication of application: **11.06.2014**
(21) Application number: 13194806.9
(22) Date of filing: 28.11.2013
(51) Int. Cl.: F02K 1/08, F02K 1/30

(54) **Exhaust Diffuser**

(30) Priority: 07.12.2012 US 201213708238
(71) Applicant: General Electric Company, Schenectady, New York 12345 (US)
(72) Inventor: Chouhan, Rohit, 560066 Bangalore (IN); Subramaniyan, Moorthi, 560066 Bangalore (IN); Chengappa, Manjunath Bangalore, 560066 Bangalore (IN); Rai, Sachin Kumar, 834004 Ranchi (IN)
(74) Representative: Picker, Madeline Margaret

(57) **Abstract**

An exhaust diffuser 150 is provided having a center body 201 having an inlet adapted for coupling to a turbine. The center body 201 has an outer wall 205, and a guide member 210 disposed inside the center body 201. A flow path reducing member 220 is disposed inside the center body 201. The flow path reducing member 220 is configured to be movable into a first position and a second position. The first position is an inactive position having no impact on an exit flow area of the exhaust diffuser 150, and the second position is a deployed position that reduces the exit flow area of the exhaust diffuser 150.

## Description

The subject matter disclosed herein relates to turbines and, in particular, to exhaust diffusers for use with gas turbines and steam turbines.

In turbines, high energy gas flows along pathways where they interact with turbine blades arrayed at varying turbine stages to produce rotation of the turbine blades about a rotor and mechanical energy. The gas eventually exits the pathway and enters an exhaust diffuser, which is disposed downstream from the last turbine stage. The diffuser serves to condition the flow of diffusing gas, which is then directed towards additional equipment located further downstream.

Gas turbines are widely used in industrial and commercial operations. A typical gas turbine includes an axial compressor at the front, one or more combustors around the middle, and a turbine at the rear. The compressor includes multiple stages of rotating blades and stationary vanes. Ambient air enters the compressor, and the rotating blades and stationary vanes progressively impart kinetic energy to the working fluid (air) to bring it to a highly energized state. The working fluid exits the compressor and flows to the combustors where it mixes with fuel and ignites to generate combustion gases having a high temperature and pressure. The combustion gases exit the combustors and flow to the turbine where they expand to produce work.

An exhaust diffuser downstream of the turbine converts the kinetic energy of the flow exiting the last stage of the turbine into potential energy in the form of increased static pressure. This is accomplished by conducting the flow through a duct of increasing area, during which the generation of total pressure loss is to be minimized. The exhaust diffuser typically includes one or more aerodynamic airfoils which surround structural struts that support the bearing and also one or more manways downstream to struts.

In an aspect of the present invention, an exhaust diffuser is provided having a center body having an inlet adapted for coupling to a turbine. The center body has an outer wall, and a guide member disposed inside the center body. A flow path reducing member is disposed inside the center body. The flow path reducing member is configured to be movable into a first position and a second position. The first position is an inactive position having no impact on an exit flow area of the exhaust diffuser, and the second position is a deployed position that reduces the exit flow area of the exhaust diffuser.

In another aspect of the present invention, a gas turbine having an exhaust diffuser is provided. The exhaust diffuser has a center body having an inlet adapted for coupling to a turbine. The center body has an outer wall, and a guide member disposed inside the center body. A flow path reducing member is disposed inside the center body. The flow path reducing member is configured to be movable into a first position and a second position. The first position is an inactive position having no impact on an exit flow area of the exhaust diffuser, and the second position is a deployed position that reduces the exit flow area of the exhaust diffuser.

In yet another aspect of the present invention, an exhaust diffuser in combination with a gas turbine is provided having a center body having an inlet adapted for coupling to a turbine. The center body has an outer wall, and a guide member disposed inside the center body. A flow path reducing member is disposed inside the center body. The flow path reducing member is configured to be movable into a first position and a second position. The first position is an inactive position having no impact on an exit flow area of the exhaust diffuser, and the second position is a deployed position that reduces the exit flow area of the exhaust diffuser.
FIG. 1 illustrates a simplified schematic view of a gas turbine, according to an aspect of the present invention;
FIG. 2 illustrates a simplified cross-sectional view of an exhaust diffuser, according to an aspect of the present invention;
FIG. 3 illustrates a simplified cross-sectional view of an exhaust diffuser, according to an aspect of the present invention;
FIG. 4 illustrates a simplified cross-sectional view of an exhaust diffuser, according to another aspect of the present invention;
FIG. 5 illustrates a simplified cross-sectional view of an exhaust diffuser, according to an aspect of the present invention;
FIG. 6 illustrates a simplified cross-sectional view of an exhaust diffuser, according to an aspect of the present invention;
FIG. 7 illustrates a simplified cross-sectional view of an exhaust diffuser, according to an aspect of the present invention;
FIG. 8 illustrates a simplified cross-sectional view of an exhaust diffuser, according to an aspect of the present invention; and
FIG. 9 illustrates a simplified cross-sectional view of a flow reducing member of an exhaust diffuser, according to an aspect of the present invention.

One or more specific aspects/embodiments of the present invention will be described below. In an effort to provide a concise description of these aspects/embodiments, all features of an actual implementation may not be described in the specification. It should be appreciated that in the development of any such actual implementation, as in any engineering or design project, numerous implementation-specific decisions must be made to achieve the developers' specific goals, such as compliance with machine-related, system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments. Additionally, it should be understood that references to "one embodiment", "one aspect" or "an embodiment" or "an aspect" of the present invention are not intended to be interpreted as excluding the existence of additional embodiments or aspects that also incorporate the recited features.

Exhaust gases from the turbine enter the exhaust diffuser with a wide range of inlet swirl conditions and mass flow across the load range of the gas turbine. When gas turbines operate at part load (part load defined as when a gas turbine is operating or producing mechanical power or electricity at less than its full capacity) exhaust gas mass flow is lower than full load condition and also swirl of exhaust gasses from turbine exit/diffuser inlet is different from full load condition. Diffuser area variation from inlet to exit is optimized for full load condition to maximize the kinetic energy recovery. Therefore at part load, diffuser recovery drops due to flow separation on the surface of the rotor housing. This separation triggers a mass flow swirl due to the flow condition and the total pressure profile at the diffuser inlet is much different than full load condition. Therefore, it is desirable to be able to reduce the flow separation across the diffuser inner wall and/or over rotor housing to enhance the recovery or aerodynamic performance of the gas turbine.

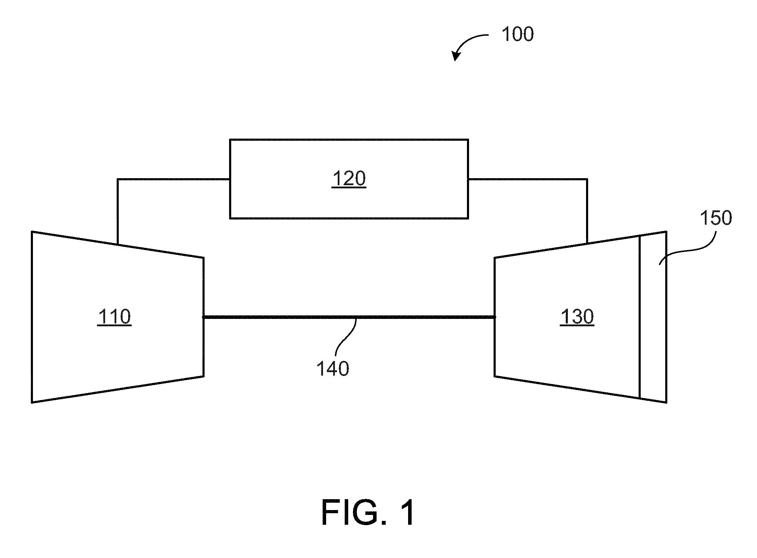

FIG. 1 illustrates a simplified schematic view of a gas turbine 100, according to an aspect of the present invention. The gas turbine 100 includes a compressor 110, combustor 120 and turbine 130. Air is compressed by compressor 110 and input to combustor 120. The compressed air and fuel is ignited in combustor 120 and the resulting expanding gas is used to drive turbine 130. A shaft (or rotor) 140 is connected to both compressor 110 and turbine 130, and this shaft may also be connected to a load, such as a generator (not shown). The gas turbine 100 may be used in land based, marine or aeronautical applications. The turbine section 130 is also connected to an exhaust diffuser 150, which is used to gradually diffuse (i.e., expand and slow) the exhaust flow for maximum pressure recovery of the exhaust flow, thereby enhancing performance of the gas turbine 100.

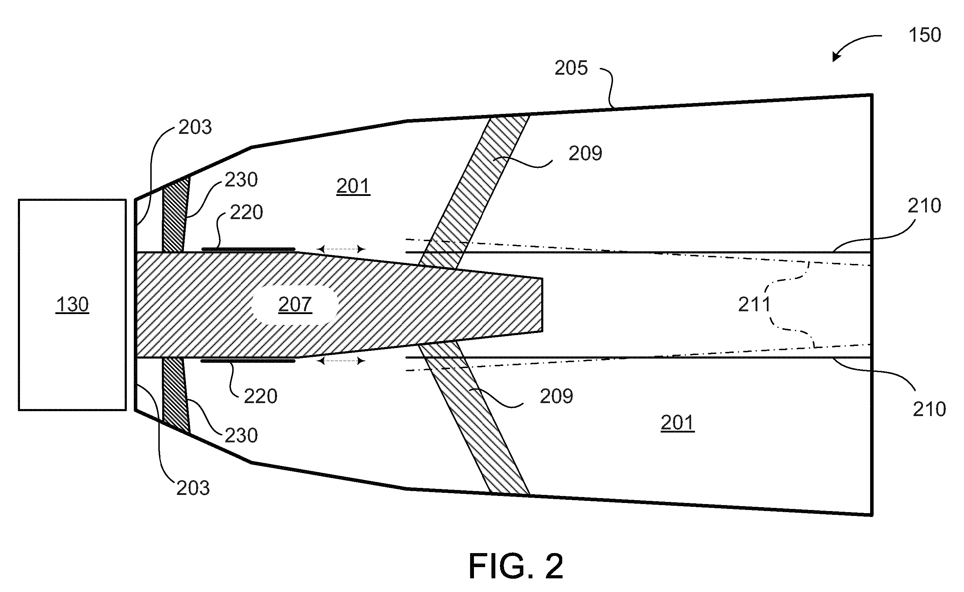

FIG. 2 illustrates a simplified cross-sectional view of exhaust diffuser 150, according to an aspect of the present invention. The exhaust diffuser 150 is disposed downstream of the last turbine stage in turbine 130. The exhaust diffuser includes a center body 201 having an inlet 203 adapted for coupling to turbine 130. The inlet 203 is formed of an annular opening. Gas exiting the turbine 130 passes through the annular opening of inlet 203 and enters the exhaust diffuser 150. The center body 201 also has an outer wall 205, and a rotor housing 207 is disposed at least partially inside the center body 201. A plurality of struts 230 may connect the rotor housing to the outer wall 205. A guide member 210 is disposed inside the center body 201. The guide member 210 (also referred to as a flow splitter cylinder) may be used to separate the flow of gas expanding within exhaust diffuser 150, and/or may be used to guide flows along desired flowpaths. The guide member 210 may have a cylindrical shape (as shown), a frusto-conical shape (as shown by the dashed lines 211) or any other shape as desired in the specific application. The guide member 210, 211 may be attached to a plurality of manways 209.

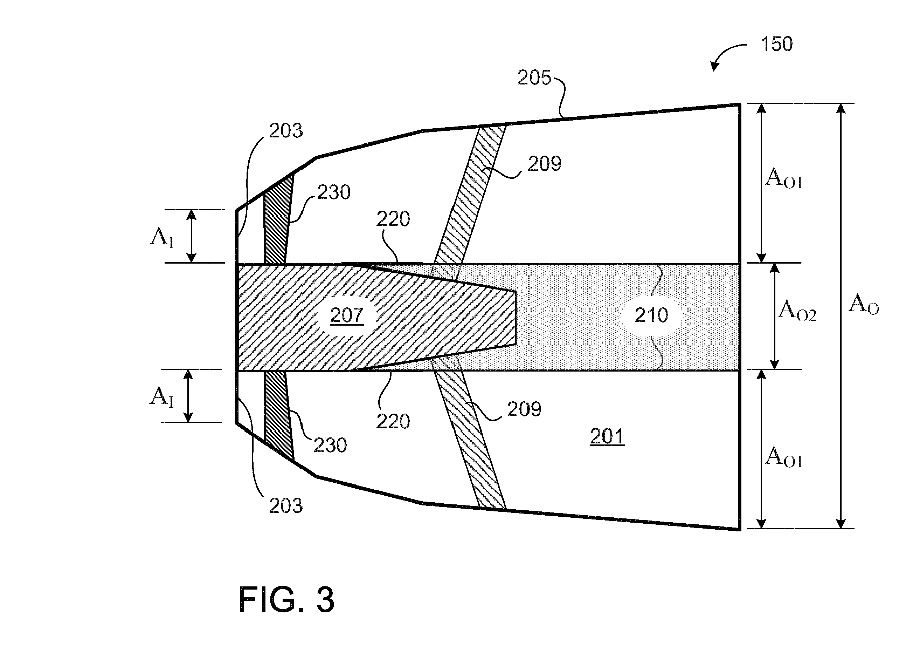

A flow path reducing member 220 is disposed inside the center body 201 and mounted to the rotor housing 207. The flow path reducing member 220 is configured to be movable into a first position (as shown in FIG. 2) and a second position (shown in FIG. 3). The first position is an inactive position having no or minimal impact on an exit flow area of the exhaust diffuser 150. The second position is a deployed position that reduces the exit flow area of the exhaust diffuser 150.

FIG. 3 illustrates a simplified cross-sectional view of exhaust diffuser 150, according to an aspect of the present invention. The flow path reducing member 220 has been moved into the second position and this configuration reduces the exit flow area of the exhaust diffuser. The annular opening 203 of the exhaust diffuser 150 has an area equal to A_{I}, where A_{I} has an annular shape. The exit flow area A_{O} of the exhaust diffuser is greater than the inlet flow area A_{I}, therefore the exhaust diffuser acts to diffuse and/or recover kinetic energy of the gas exiting the turbine 130. The exit flow area A_{O} is comprised of two portions, A_{O1} and A_{O2}. A_{O1} is annularly shaped, whereas A_{O2} is substantially in the shape of a circle. Therefore, A_{O} = A_{O1} + A_{O2}. In this example, the flow path reducing member 220 is configured to move toward the guide member 210 when changing from the first position to the second position and isolating the enclosed volume of diffuser 150 within 220 and 210 from exhaust gas flow.

At full speed full load (FSFL) of turbine 100, it is desirable to use the entire exit flow area A_{O} of the exhaust diffuser 150. However, at part load (e.g., 50%) of turbine 100 the exit flow area A_{O} is not sized for the best efficiency. Due to the change in flow condition (i.e., mass flow, swirl and total pressure) radial distribution at the diffuser inlet is significantly different from FSFL condition and therefore area ratio (A_{O/} A₁) is no longer at an optimum or desirable level for part load condition and would increase the flow separation and therefore increase aerodynamic losses.

According to an aspect of the present invention, the exhaust diffuser can be configured to place the flow path reducing member 220 in a first position (as shown in FIG. 2) when the turbine is operating at FSFL, and the flow path reducing member 220 can be placed in a second position (as shown in FIG. 3) when the turbine 100 is operating at less than full load, or at part load. At FSFL gas exiting the turbine 130 can pass through and exit both areas A_{O1} and A_{O2}, or the entire exit flow area A_{O}. However, at part load the flow reducing members can be moved to obstruct the center portion of the exhaust diffuser which is area A_{O2}. This leaves only area A_{O1} as the flow path for the exhaust gas. This reduction in area makes it more favorable to low mass flow and other flow conditions at partload and therefore mitigates the separation and improvse recovery of diffuser 150. As a result, the turbine can be operated more efficiently at part load.

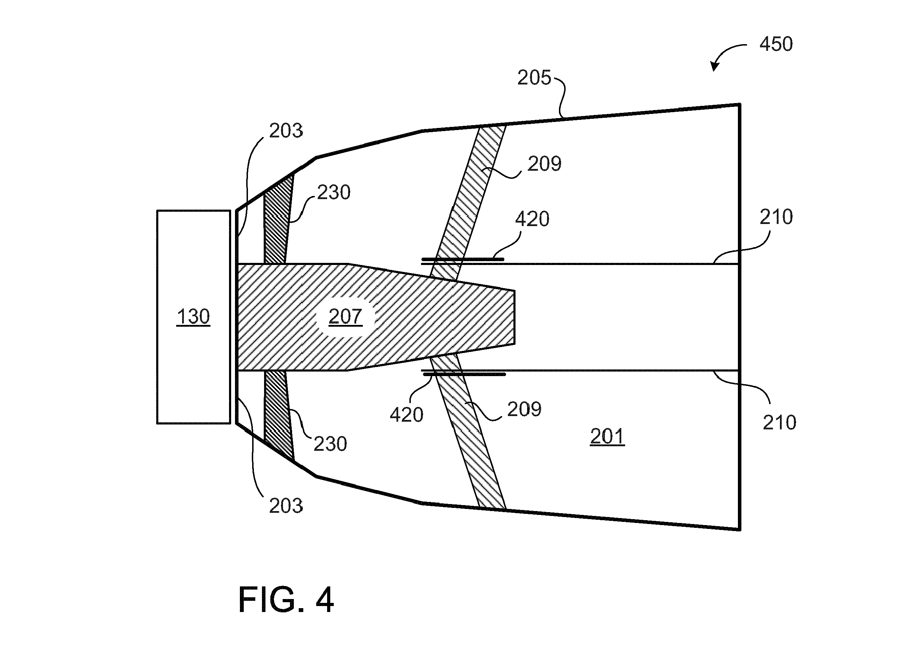

FIG. 4 illustrates a simplified cross-sectional view of exhaust diffuser 450, according to another aspect of the present invention. The flow path reducing member 420 is mounted on the guide member 210, and the flow path reducing member 420 is configured to move toward the rotor housing when changing from the first position (as shown) into the second position (shown in FIG. 3). The first position is an inactive position having no or minimal impact on the exit flow area A_{O} of the exhaust diffuser 450. The second position is a deployed position that reduces the exit flow area of the exhaust diffuser 450 to an area equal to A_{O1}.

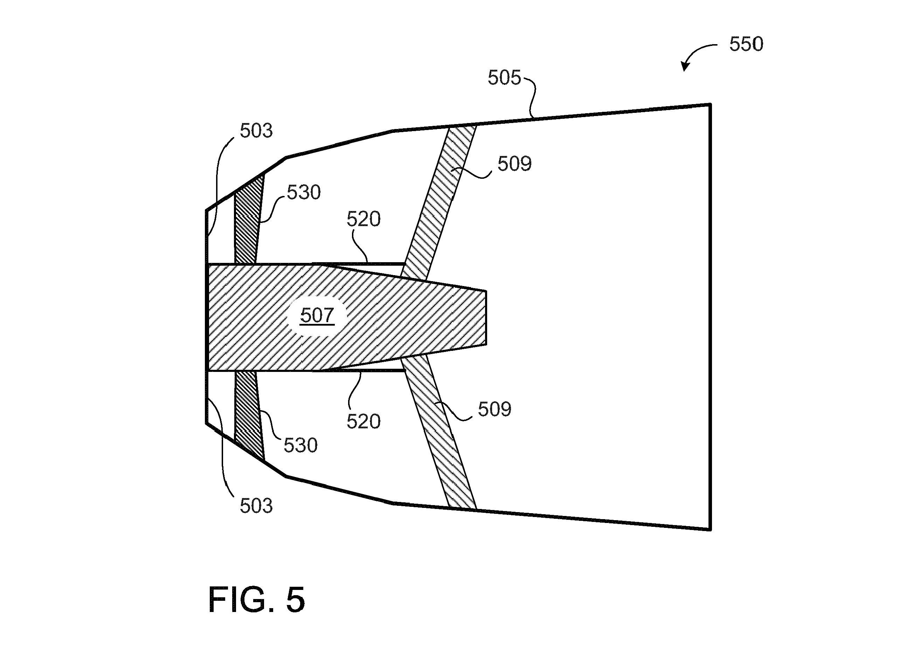

FIG. 5 illustrates a simplified cross-sectional view of exhaust diffuser 550, according to an aspect of the present invention. The flow path reducing member 520 has been moved into the second position and this configuration reduces the flow area at the downstream end of the flow path reducing member 520 (near manways 509) and changes the flow area ratio of the exhaust diffuser in the area of the manways. The annular opening 503 of the exhaust diffuser 550 is located upstream of struts 530, which are connected to rotor housing 507 and outer wall 505. In this example, the flow path reducing member 520 may be configured to move toward the manways 509 when changing from the first position to the second position.

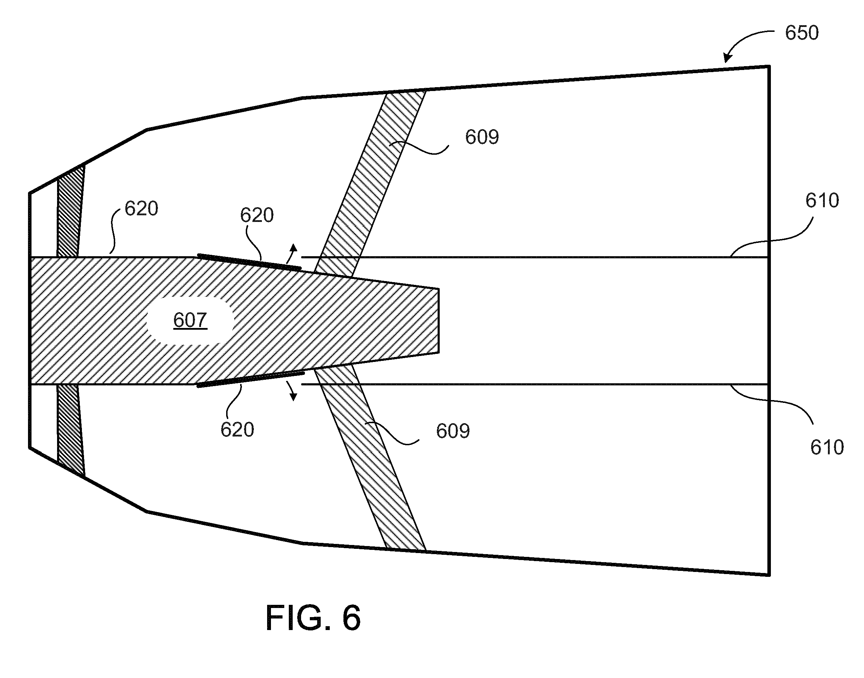

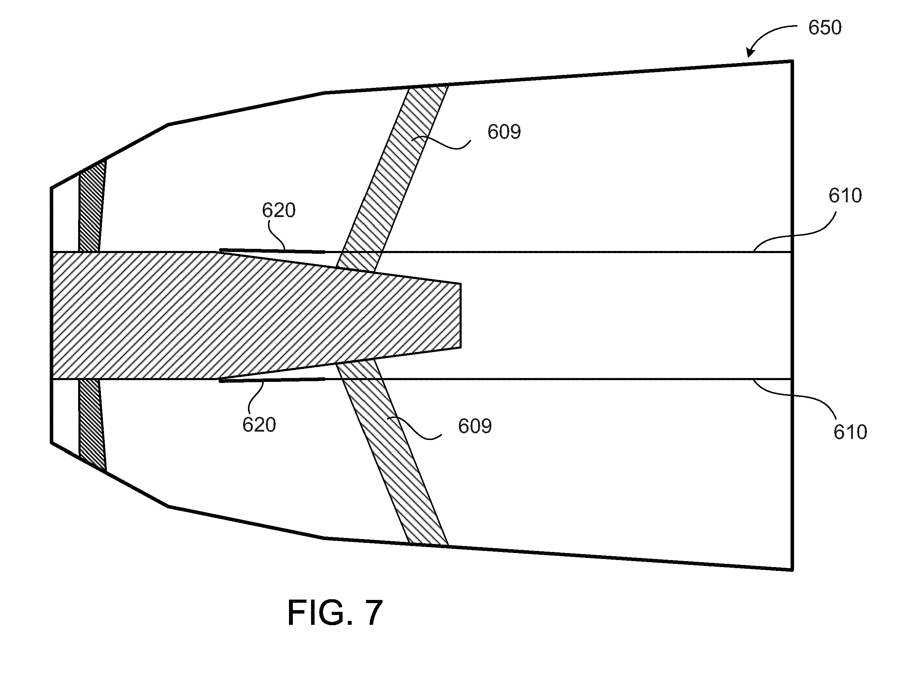

FIG. 6 illustrates a simplified cross-sectional view of exhaust diffuser 650, according to an aspect of the present invention. The flow path reducing member 620 is in the first position and is configure to pivot up into the second position. The second position reduces the flow area of the exhaust diffuser. In this example, the flow path reducing member 620 may be configured to move toward the end of the guide member 610 near manways 609 when changing from the first position to the second position. FIG. 7 illustrates the flow path reducing member 620 in the second position.

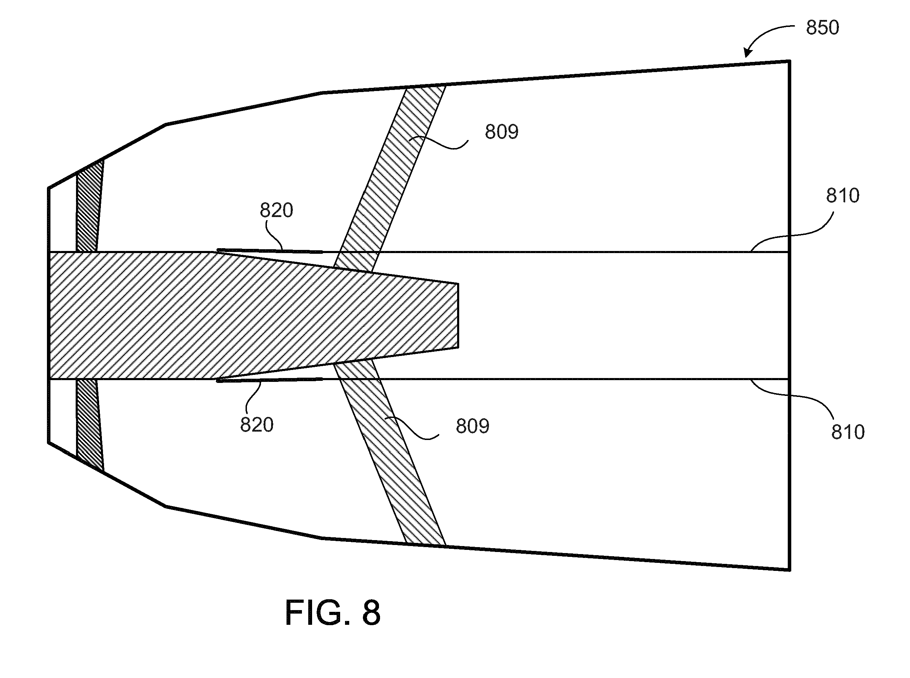

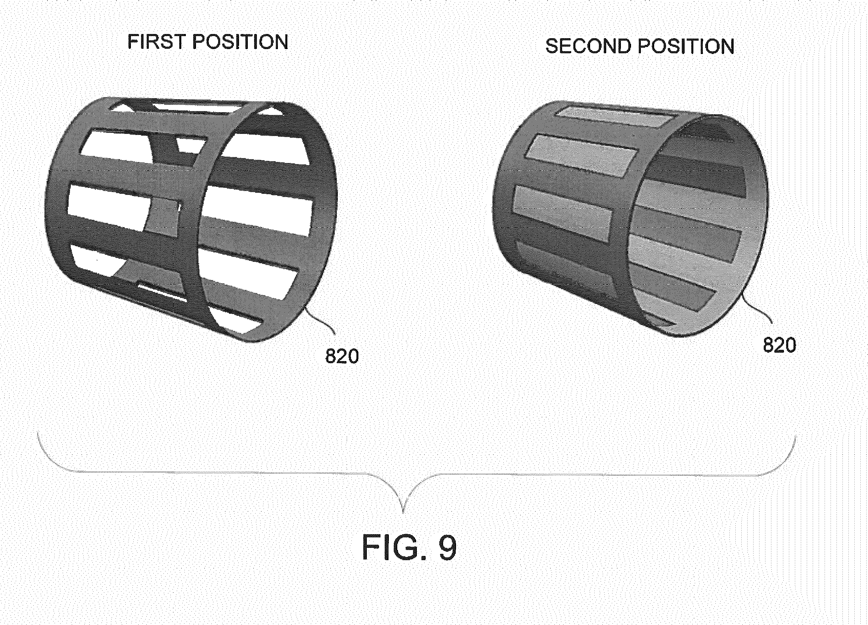

FIG. 8 illustrates a simplified cross-sectional view of exhaust diffuser 850, according to an aspect of the present invention. The flow path reducing member 820 takes the form of a segmented cylinder and rotates about an axial axis to change between the first position and second position. The flow path reducing member 820 may also have a frusto-conical shape. FIG. 9 illustrates the first and second positions of the flow path reducing member 820. The first position of the flow path reducing member allows exhaust flow within the guide member 810. The second position cuts off flow from within the guide member 810, and reduces the flow area of the exhaust diffuser. In this example, the flow path reducing member 820 may be configured to move rotate about its central longitudinal or axial axis to "open" or "close". The flow path reducing member may be configured as two concentric flow path reducing members, where apertures may be selectively opened of closed to adjust the flow path. Alternatively, the guide member 810 may be configured as one concentric member having apertures and the flow path reducing member may have complementary apertures, so that upon rotation of the flow path reducing member, the exhaust diffuser 850 may have a variable flow area based on operating conditions of the turbine.

As one example only, a gas turbine might have a certain efficiency at FSFL, and that efficiency might drop when operated at part load. This can have a substantial economic impact for large megawatt gas turbines. By deploying the flow path reducing member 220, 420 into the second position during part load operation, the power coefficient can be increased, which is actually a substantial improvement. In fact, it was unexpected to have such a large improvement and this indicates substantially improved results over part load operation in gas turbines without the flow path reducing member.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. An exhaust diffuser comprising:
   a center body having an inlet adapted for coupling to a turbine, the center body having an outer wall;
   a guide member disposed inside the center body;
   a flow path reducing member disposed inside the center body, the flow path reducing member configured to be movable into a first position and a second position;
   wherein, the first position is an inactive position having no impact on an exit flow area of the exhaust diffuser, and the second position is a deployed position that reduces the exit flow area of the exhaust diffuser.
2. The exhaust diffuser of clause 1, in combination with a gas turbine.
3. The exhaust diffuser of any preceding clause, wherein the flow path reducing member is mounted on a rotor housing.
4. The exhaust diffuser of any preceding clause, wherein the flow path reducing member is configured to move toward the guide member when changing from the first position to the second position.
5. The exhaust diffuser of any preceding clause, wherein the flow path reducing member is mounted on the guide member.
6. The exhaust diffuser of any preceding clause, wherein the flow path reducing member is configured to move toward the rotor housing when changing from the first position to the second position.
7. The exhaust diffuser of any preceding clause, further comprising:
   a plurality of manway supports connected to the outer wall and a rotor housing; and
   wherein the guide member is connected to the plurality of manway supports.
8. The exhaust diffuser of any preceding clause, wherein the guide member has a frusto-conical shape or a cylindrical shape.
9. A gas turbine having an exhaust diffuser, the exhaust diffuser comprising:
   a center body having an inlet adapted for coupling to a turbine, the center body having an outer wall;
   a guide member disposed inside the center body;
   a flow path reducing member disposed inside the center body, the flow path reducing member configured to be movable into a first position and a second position;
   wherein, the first position is an inactive position having no impact on an exit flow area of the exhaust diffuser, and the second position is a deployed position that reduces the exit flow area of the exhaust diffuser.
10. The gas turbine of any preceding clause, wherein the flow path reducing member is mounted on a rotor housing.
11. The gas turbine of any preceding clause, wherein the flow path reducing member is configured to move toward the guide member when changing from the first position to the second position.
12. The gas turbine of any preceding clause, wherein the flow path reducing member is mounted on the guide member.
13. The gas turbine of any preceding clause, wherein the flow path reducing member is configured to move toward the rotor housing when changing from the first position to the second position.
14. The gas turbine of any preceding clause, further comprising:
   a plurality of manway supports connected to the outer wall and a rotor housing; and
   wherein the guide member is connected to the plurality of manway supports.
15. The gas turbine of any preceding clause, wherein the guide member has a frusto-conical shape or a cylindrical shape.
16. An exhaust diffuser in combination with a gas turbine, the exhaust difffuser comprising:
   a center body having an inlet adapted for coupling to a turbine, the center body having an outer wall;
   a guide member disposed inside the center body;
   a flow path reducing member disposed inside the center body, the flow path reducing member configured to be movable into a first position and a second position;
   wherein, the first position is an inactive position having no impact on an exit flow area of the exhaust diffuser, and the second position is a deployed position that reduces the exit flow area of the exhaust diffuser.
17. The exhaust diffuser of any preceding clause, wherein the flow path reducing member is mounted on a rotor housing, and wherein the flow path reducing member is configured to move toward the guide member when changing from the first position to the second position.
18. The exhaust diffuser of any preceding clause, wherein the flow path reducing member is mounted on the guide member, and wherein the flow path reducing member is configured to move toward the rotor housing when changing from the first position to the second position.
19. The exhaust diffuser of any preceding clause, further comprising:
   a plurality of manway supports connected to the outer wall and a rotor housing; and
   wherein the guide member is connected to the plurality of manway supports.
20. The exhaust diffuser of any preceding clause, wherein the guide member has a frusto-conical shape or a cylindrical shape.

## Claims

1. An exhaust diffuser (150) comprising:
a center body (201) having an inlet (203) adapted for coupling to a turbine, the center body (201) having an outer wall (205);
a guide member (210) disposed inside the center body (201);
a flow path reducing member (220) disposed inside the center body (201), the flow path reducing member (220) configured to be movable into a first position and a second position;
wherein, the first position is an inactive position having no impact on an exit flow area of the exhaust diffuser (150), and the second position is a deployed position that reduces the exit flow area of the exhaust diffuser (150).

2. The exhaust diffuser of claim 1, wherein the flow path reducing member (220) is mounted on a rotor housing (207).

3. The exhaust diffuser of claim 1 or claim 2, wherein the flow path reducing member (220) is configured to move toward the guide member (210) when changing from the first position to the second position.

4. The exhaust diffuser of claim 1, 2 or 3, wherein the flow path reducing member (220) is mounted on the guide member (210).

5. The exhaust diffuser of any preceding claim, wherein the flow path reducing member (210) is configured to move toward the rotor housing (207) when changing from the first position to the second position.

6. The exhaust diffuser of any preceding claim, further comprising:
a plurality of manway supports connected to the outer wall (205) and a rotor housing (207); and
wherein the guide member (210) is connected to the plurality of manway supports.

7. The exhaust diffuser of any preceding claim, wherein the guide member (210) has a frusto-conical shape or a cylindrical shape.

8. The exhaust diffuser of any one of claims 1 to 7, in combination with a gas turbine (100).

9. A gas turbine (100) having an exhaust diffuser (150) in accordance with any one of claims 1 to 7.
